# FASCICULE DE BREVET EUROPEEN

(11) **EP 0 486 415 B1**
(45) Date de publication et mention de la délivrance du brevet: **17.08.1994**
(21) Numéro de dépôt: 91440090.8
(22) Date de dépôt: 08.11.1991
(51) Int. Cl.: A01D 34/66, A01D 67/00

(54) **Faucheuse à châssis indépendant comportant un dispositif de suspension et un dispositif d'allègement perfectionnés**
Mähmaschine mit unabhängigem Rahmen, der Aufhängungs- und Erleichterungsvorrichtungen aufweisst
Mower with an independent frame comprising a suspension device and a lightening device

(30) Priorité: 12.11.1990 FR 9014187
(43) Date de publication de la demande: 20.05.1992
(73) Titulaire: KUHN S.A., F-67700 Saverne (FR)
(72) Inventeur: Wattron, Bernard, F-67700 Haegen (FR); Ermacora, Rino, F-67700 St Jean Saverne (FR)

(56) Documents cités:
- EP-A- 0 073 359
- EP-A- 0 211 785
- DE-A- 1 582 147
- DE-A- 1 582 270
- DE-A- 3 444 412
- FR-A- 2 335 147
- FR-A- 2 424 694
- FR-A- 2 608 362
- US-A- 3 751 889

## Description

La présente invention concerne une faucheuse comportant un châssis s'appuyant au travail sur le sol au moyen d'au moins une roue, un moyen de liaison destiné à lier le châssis à un véhicule moteur et lié audit châssis à l'aide d'une articulation d'axe dirigé vers le haut, un mécanisme de récolte, un dispositif de suspension liant le mécanisme de récolte au châssis, de sorte à autoriser un déplacement en hauteur dudit mécanisme de récolte par rapport audit châssis, et un dispositif d'allègement du mécanisme de récolte comprenant au moins un organe élastiquement déformable.

Le document FR-A-2424694 concerne une faucheuse traînée ayant toutes les caractéristiques du préambule de la revendication 1.

Cet état de la technique connu montre une faucheuse traînée comportant un corps qui s'étend transversalement à la direction de travail. Le corps comprend un châssis et un mécanisme de récolte. A sa partie supérieure, le châssis est lié à un timon qui permet d'atteler la faucheuse à un tracteur. Derrière chacune de ses extrémités longitudinales, le châssis est muni d'une roue par l'intermédiaire desquelles il s'appuie sur le sol. Chaque roue est liée au châssis au moyen d'un bras de roue respectif qui, sous l'action d'un vérin hydraulique correspondant, peut déplacer en hauteur ledit châssis par rapport à la roue correspondante. Le mécanisme de récolte, quant à lui, s'étend sous le châssis auquel il est suspendu à l'aide de deux parallélogrammes déformables agencés suivant la direction de travail. Ces deux parallélogrammes déformables sont identiques et leurs petits côtés sont constitués par des bielles. Chaque paire de bielles est articulée d'une part devant une extrémité longitudinale du châssis et d'autre part à l'extrémité longitudinale correspondante du mécanisme de récolte. Entre le mécanisme de récolte et le châssis s'étend, par ailleurs, un dispositif d'allègement dudit mécanisme de récolte qui comporte deux ressorts de traction s'étendant chacun près d'une extrémité longitudinale du châssis, respectivement du mécanisme de récolte.

Dans cette faucheuse connue, une grande partie du poids du corps et du timon est reportée directement sur les roues du châssis. De ce fait, l'attelage du tracteur est peu sollicité et les risques de capotage du tracteur sont faibles.

De plus, grâce au dispositif de suspension et au dispositif d'allègement, le mécanisme de récolte peut se déplacer en hauteur par rapport au châssis, afin de s'adapter aux configurations du terrain et passer aisément par-dessus les obstacles que peut présenter ledit terrain.

Ce type de dispositif de suspension à parallélogrammes déformables présente cependant l'inconvénient d'augmenter le gabarit du corps de la faucheuse dans la direction de travail. En effet, l'agencement des bielles dans la direction de travail fait que le mécanisme de récolte se trouve en général décalé par rapport au châssis, souvent vers l'avant et d'une longueur voisine de celle des bielles.

Par ailleurs, comme dans chaque parallélogramme déformable, la bielle supérieure s'étend nettement au-dessus de la bielle inférieure, la hauteur du mécanisme de récolte est importante. De plus, comme le mécanisme de récolte s'étend sous le châssis, ce dernier a également une hauteur importante.

En outre, pour lever le mécanisme de récolte par rapport au sol, il est prévu, dans la faucheuse connue, de déplacer en hauteur le châssis par rapport aux roues, ce qui relève également le mécanisme de récolte. Mais, dans ce cas, le centre de gravité du corps s'éloigne du sol et la faucheuse devient moins stable, donc plus difficilement transportable.

De plus, l'utilisation de ce type de parallélogrammes déformables requiert beaucoup d'articulations.

Il s'est enfin également avéré que le dispositif d'allègement utilisé dans cette faucheuse connue n'était pas optimal. En effet, compte tenu des tolérances usuelles de fabrication des ressorts, ces derniers peuvent avoir des caractéristiques qui diffèrent dans des proportions appréciables. Comme, par ailleurs, la tension de chaque ressort doit être réglée individuellement par l'utilisateur en fonction des conditions de travail, il y a également un risque d'erreur possible. Il peut, en conséquence, arriver très fréquemment que les deux extrémités du mécanisme de récolte reposent avec des pressions différentes sur le sol.

Le but de la présente invention consiste, tout en gardant l'avantage de la sollicitation limitée de l'attelage du véhicule moteur, à améliorer les faucheuses de l'état de la technique, de sorte à rendre celles-ci plus compactes, tout en permettant au mécanisme de récolte de bien s'adapter au relief du terrain.

A cet effet, la faucheuse selon la présente invention est caractérisée par le fait que le dispositif de suspension comporte un bras de suspension qui s'étend au-dessus du mécanisme de récolte et transversalement à la direction de travail, lequel bras de suspension est lié d'une part au mécanisme de récolte au moyen d'une première articulation d'axe au moins sensiblement parallèle à la direction de travail et d'autre part au châssis au moyen d'une deuxième articulation d'axe au moins sensiblement parallèle à l'axe de la première articulation, ledit axe de la première articulation s'étendant au moins sensiblement dans le voisinage du plan vertical dirigé suivant la direction de travail et contenant le centre des masses dudit mécanisme de récolte, et que l'organe élastiquement déformable est agencé entre ledit bras de suspension et ledit châssis.

Etant donné que dans la faucheuse selon l'invention le dispositif de suspension s'étend au-dessus du mécanisme de récolte et transversalement à la direction de travail, le dispositif de suspension n'intervient ni dans la dimension du corps mesurée suivant la direction de travail, ni dans la hauteur du mécanisme de récolte. Le corps de la faucheuse peut donc être particulièrement compact.

Du fait que le dispositif de suspension comporte un bras de suspension lié d'une part au mécanisme de récolte au moyen d'une première articulation d'axe au moins sensiblement parallèle à la direction de travail et d'autre part au châssis au moyen d'une deuxième articulation d'axe au moins sensiblement parallèle à l'axe de la première articulation, le mécanisme de récolte peut se déplacer en hauteur par rapport au châssis, tout en pivotant autour de l'axe de la première articulation pour s'adapter au mieux au sol. Par ailleurs, deux articulations suffisent au bon fonctionnement du dispositif de suspension. Du reste, le relevage du mécanisme de récolte peut être fait sans éloigner le châssis du sol ; au transport, le centre de gravité du corps reste donc relativement près du sol, ce qui confère une bonne stabilité à la faucheuse.

En sus, comme l'axe de la première articulation s'étend au moins sensiblement dans le voisinage du plan vertical dirigé suivant la direction de travail et contenant le centre des masses dudit mécanisme de récolte, et que l'organe élastiquement déformable est agencé entre le bras de suspension et le châssis, les pressions avec lesquelles les deux extrémités du mécanisme de récolte reposent sur le sol sont égales ou tout au moins très proches l'une de l'autre.

Selon une caractéristique supplémentaire de l'invention, il est prévu que l'organe élastiquement déformable comporte une enveloppe déformable sous pression.

Dans une réalisation particulièrement avantageuse, il est prévu que l'enveloppe déformable contienne un gaz. Préférentiellement, l'enveloppe déformable pourra contenir de l'air.

De plus, il peut être prévu que l'enveloppe déformable soit gonflable à partir d'une valve au travers de laquelle le gaz est amené à la pression désirée. Ainsi, la rigidité de l'organe élastiquement déformable pourra aisément être modulée afin d'adapter le délestage du mécanisme de récolte aux diverses conditions de fauchage rencontrées. Pour pouvoir lier aisément l'enveloppe déformable d'une part au châssis et d'autre part au bras de suspension, il est avantageux d'utiliser une enveloppe déformable qui est munie, à chacune de ses extrémités longitudinales, d'un flasque correspondant. Du reste, l'un au moins des flasques est destiné à être muni de la valve.

En outre, pour limiter la déformation latérale de l'enveloppe déformable et pour la contraindre à une déformation longitudinale plus importante, il est également avantageux d'utiliser une enveloppe déformable qui soit entourée d'un organe de rigidification latérale.

Selon une autre caractéristique supplémentaire de l'invention, il est prévu que la première articulation liant le bras de suspension au mécanisme de récolte, se trouve au moins sensiblement dans le voisinage d'une droite verticale contenant le centre des masses du mécanisme de récolte. De ce fait, le poids du mécanisme de récolte peut s'appliquer directement sur la première articulation.

Par ailleurs, il est prévu que l'axe de la deuxième articulation qui lie le bras de suspension au châssis, s'étende au moins sensiblement dans le voisinage de l'articulation liant le châssis au moyen de liaison.

Pour transmettre au châssis une partie au moins de l'effort engendré par le glissement du mécanisme de récolte sur le sol, une solution avantageuse consiste à munir le bras de suspension d'un dispositif de transmission d'effort. Celui-ci pourra se trouver entre la première articulation et la deuxième articulation du bras de suspension.

Avantageusement, le dispositif de transmission d'effort peut être un galet lié au bras de suspension et destiné à s'appuyer contre le châssis.

Selon une autre caractéristique supplémentaire de l'invention, il est prévu que l'organe élastiquement déformable soit agencé entre la partie médiane du bras de suspension et l'axe de la deuxième articulation dudit bras de suspension. Dans une réalisation très avantageuse, l'organe élastiquement déformable peut également être agencé sous le bras de suspension. Dans une telle réalisation, le châssis pourra être muni d'un support qui s'étend vers le bas et sous le bras de suspension. De ce fait, l'organe élastiquement déformable pourra être agencé entre ledit support et ledit bras de suspension.

Afin de pouvoir relever le mécanisme de récolte par rapport au châssis, une solution avantageuse consiste à prévoir qu'un dispositif de relevage s'étende entre le châssis et le bras de suspension. Dans ce cas, le dispositif de relevage pourra comporter un vérin de relevage lié d'une part au châssis et d'autre part à une chaîne qui s'enroule partiellement sur une roue guidée en rotation dans le châssis et qui est liée directement ou indirectement, à son extrémité éloignée du vérin de relevage, au bras de suspension.

Selon une caractéristique supplémentaire de l'invention, il est prévu que le châssis comporte une poutre agencée, en vue de dessus, au moins sensiblement parallèlement au bras de suspension et qui s'étend dans le voisinage de ce dernier.

Dans une réalisation particulièrement avantageuse, il est aussi prévu qu'à son extrémité longitudinale s'étendant dans le voisinage du moyen de liaison, la poutre du châssis soit liée, par l'intermédiaire d'une articulation supplémentaire d'axe au moins sensiblement horizontal et dirigé au moins sensiblement suivant la direction de travail, à l'articulation liant le moyen de liaison au châssis. De plus, il est prévu qu'à son autre extrémité longitudinale, la poutre soit munie d'au moins une roue.

Avantageusement, il est encore prévu qu'au moins une roue s'étende, compte tenu de la direction d'avance au travail, derrière l'extrémité du mécanisme de récolte éloignée du moyen de liaison.

D'autres caractéristiques de l'invention apparaissent dans la description suivante d'un exemple non limitatif de réalisation de l'invention faite en référence au dessin annexé sur lequel :
- la figure 1 représente une vue de dessus d'une faucheuse selon l'invention liée à un tracteur agricole et placée dans une position de travail ;
- la figure 2 représente une vue arrière de la faucheuse - sans organes de protection - suivant la flèche II définie sur la figure 1 ;
- la figure 3 représente une vue de dessus de la faucheuse placée dans la position de transport ;
- la figure 4 représente, à une échelle agrandie, une coupe suivant le plan IV défini sur la figure 2, sur laquelle apparaît le dispositif de transmission de l'effort ;
- la figure 5 représente, à une échelle agrandie, une vue en perspective de l'organe élastiquement déformable qui équipe la faucheuse selon l'invention ;
- la figure 6 représente, à une échelle agrandie, une coupe partielle de l'organe élastiquement déformable représenté sur la figure 5.

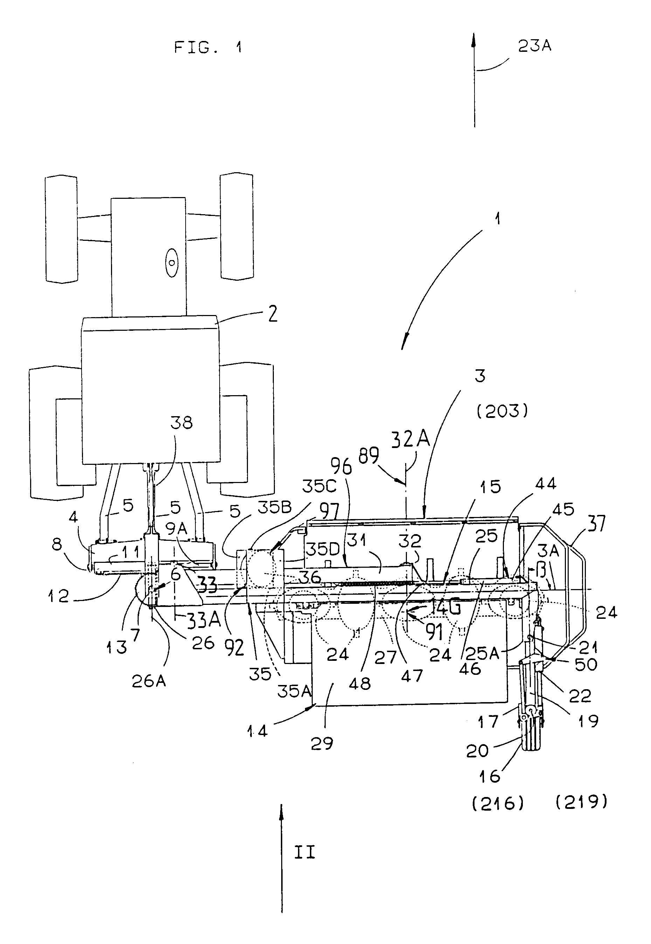

Sur les figures 1 à 3, on voit une faucheuse (1) selon l'invention. Celle-ci est attelée à un tracteur agricole (2).

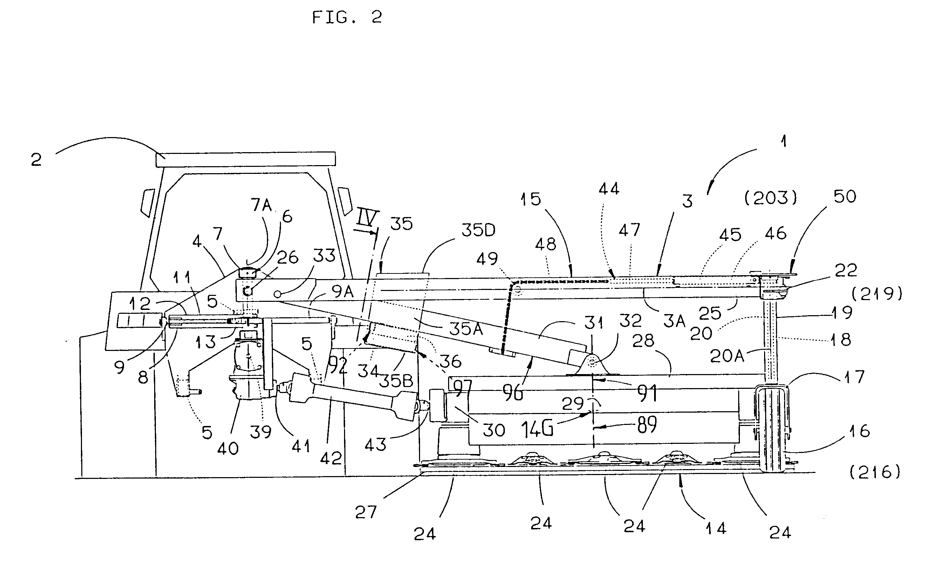

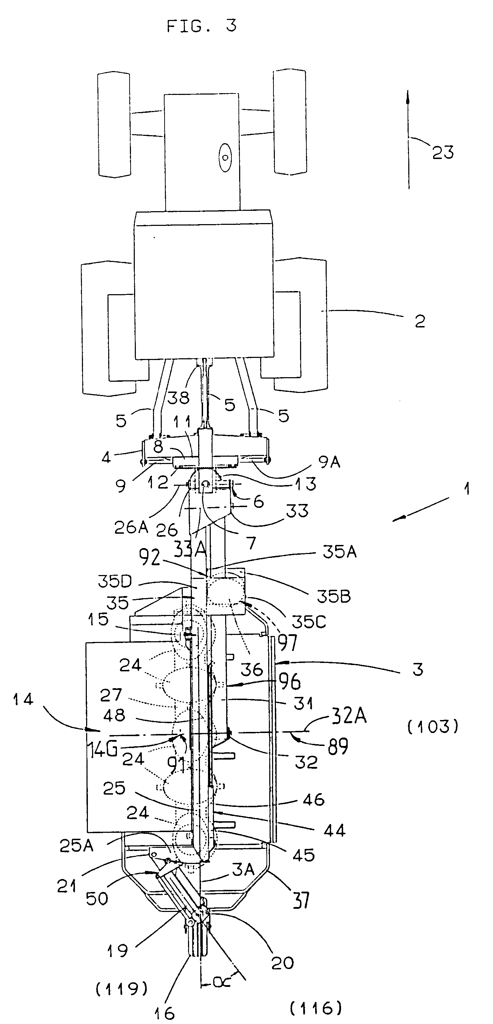

La faucheuse (1) se compose d'un corps (3) et d'une structure d'attelage (4). La structure d'attelage (4) est destinée à être liée, à sa partie frontale, à l'attelage trois points (5) du tracteur agricole (2). Le corps (3), quant à lui, est lié à la structure d'attelage (4) au moyen d'un dispositif de liaison (6) qui comporte notamment une articulation (7). Cette articulation (7) autorise un pivotement du corps (3) autour d'un axe géométrique (7A) (figure 2) au moins sensiblement vertical. La position angulaire du corps (3) par rapport à la structure d'attelage (4) peut être modifiée en faisant pivoter le corps (3) autour de l'axe vertical (7A) du dispositif de liaison (6). La mise dans la position angulaire souhaitée et le maintien dans la position de travail (203) sont réalisés par un vérin de manoeuvre (8) à double tige (9, 9A). Chaque tige (9, 9A) de ce vérin (8) est liée rigidement à son extrémité respective, s'étendant au-dehors du cylindre (11), à la structure d'attelage (4), de sorte à permettre au cylindre (11) dudit vérin (8) de se translater horizontalement sous l'action de l'huile qui l'alimente. Au cylindre (11) est rapportée rigidement une crémaillère (12) qui engrène avec une roue dentée cylindrique (13) dont l'axe de rotation est confondu avec l'axe vertical (7A) du dispositif de liaison (6). De plus, la roue dentée (13) qui tourne autour de l'axe vertical (7A), est liée en rotation avec le corps (3) de la faucheuse (1). De ce fait, le corps (3) peut s'étendre, par pivotement autour de l'axe vertical (7A) réalisé sous l'action du vérin de manoeuvre (8), soit dans une position de travail (203) à côté du tracteur (2) (figures 1 et 2), soit dans une position de transport (103) dans le prolongement du tracteur (2) (figure 3).

Par ailleurs, le corps (3) de la faucheuse (1) comporte un mécanisme de récolte (14) suspendu à un châssis (15). A son extrémité éloignée du dispositif de liaison (6), le châssis (15) s'appuie sur le sol au moyen d'une roue (16) qui roule entre les ailes d'une chape (17).

Sur le dessus de la chape (17) est rapporté rigidement un tourillon (18) dont l'axe longitudinal s'étend vers le haut. Un bras de positionnement (19) en forme de potence creuse comporte, dans sa partie verticale, le tourillon (18). La liaison du tourillon (18) avec le bras de positionnement (19) est réalisée par une articulation (20) de type pivot dont l'axe géométrique (20A) est au moins sensiblement vertical. A son extrémité longitudinale opposée au tourillon (18), le bras de positionnement (19) est lié au châssis (15) au moyen d'une articulation (21). Celle-ci est aussi de type pivot et son axe géométrique s'étend au moins sensiblement parallèlement à l'axe géométrique (20A) de la précédente liaison pivot (20). De ce fait, la position angulaire du bras de positionnement (19) muni de la roue (16), peut être modifiée en faisant pivoter ledit bras (19) par rapport au châssis (15) autour de l'axe géométrique de l'articulation (21). Ainsi, le bras de positionnement (19) permet à la roue (16) de tourner partiellement autour de l'extrémité du mécanisme de récolte (14) éloignée du tracteur (2) pour placer ladite roue (16) soit dans la position de transport (116) (figure 3), soit dans la position de travail (216) (figure 1), dans lesquelles elle s'étend derrière le centre de gravité du corps (3) compte tenu de la direction d'avance (23 ou 23A) correspondante. C'est-à-dire que dans sa position de transport (119), le bras de positionnement (19) aligne au moins sensiblement la roue (16) avec le centre de gravité du corps (3) et l'axe vertical (7A) du dispositif de liaison (6), et que dans sa position de travail (219), le bras de positionnement (19) place la roue (16) derrière les organes de coupe (24) de la faucheuse (1). La mise dans la position souhaitée et le maintien dans celle-ci sont réalisés au moyen d'un vérin de positionnement hydraulique (22) qui s'étend entre le châssis (15) et le bras de positionnement (19).

Sur les figures 1 à 3 apparaît également très précisément la forme du châssis (15). Celui-ci se compose pour l'essentiel d'une poutre (25) qui s'étend, au travail, transversalement à la direction d'avance (23A) au travail et, au transport, parallèlement à la direction d'avance (23) au transport. Elle est liée à la structure d'attelage (4) au moyen du dispositif de liaison (6). En plus de l'articulation (7) autorisant un pivotement du corps (3), respectivement du châssis (15), autour de son axe vertical (7A), le dispositif de liaison (6) comporte encore une articulation supplémentaire (26) agencée entre la précédente articulation (7) du dispositif de liaison (6) et le corps (3). L'axe géométrique (26A) de celle-ci est au moins sensiblement horizontal et s'étend orthogonalement à l'axe longitudinal (3A) du corps (3) pour permettre au châssis (15) de pivoter par rapport à la structure d'attelage (4). De plus, cet axe horizontal (26A) est concourant avec l'axe vertical (7A) du dispositif de liaison (6). Un tel agencement permet à la roue (16), respectivement au corps (3) de s'adapter au relief du sol par pivotement du corps (3) autour de cet axe horizontal (26A) du dispositif de liaison (6). En outre, le châssis (15) comporte aussi une console (25A). Celle-ci s'étend transversalement à l'axe longitudinal de la poutre (25) du châssis (15) et est liée à l'extrémité longitudinale de la poutre (25), opposée au dispositif de liaison (6). Du reste, la console (25A) du châssis (15) comporte, à son extrémité libre opposée à la poutre (25), l'articulation (21) liant le bras de positionnement (19) au châssis (15). En vue de dessus, un tel agencement permet au bras de positionnement (19), lorsqu'il est dans sa position de transport (119), de former un angle aigu (α) avec l'axe longitudinal (3A) du corps (3), alors que dans sa position de travail (219), le bras de positionnement (19) forme avec ledit axe longitudinal (3A) un angle (β) au moins sensiblement droit.

Comme visible sur les figures 1 et 3, la longueur du corps (3) de la faucheuse (1) est nettement plus grande que sa largeur. Comme de surcroît le corps (3) s'étend, au travail, à côté du tracteur (2), il est impossible de transporter la faucheuse (1) lorsqu'elle se trouve en position de travail. Il est donc nécessaire de transposer la faucheuse (1), de telle sorte que la dimension la plus longue de son corps (3) s'étende parallèlement à la direction de transport (23).

Pour placer la faucheuse (1) dans une position de travail, il suffit que le vérin de manoeuvre (8) et le vérin de positionnement (22) placent, puis maintiennent respectivement le corps (3) et le bras de positionnement (19) dans leur position de travail correspondante (203 resp. 219). La roue (16), comme décrite précédemment, est liée au bras de positionnement (19) au moyen d'une liaison pivot (20) d'axe vertical (20A), autour duquel la roue (16) peut pivoter, de sorte à suivre automatiquement la direction d'avance (23A) durant le travail.

Par contre, lorsque la faucheuse (1) est dans la position de transport (103), le vérin de positionnement (22) maintient le bras de positionnement (19) dans sa position de transport (119), tandis qu'un dispositif de verrouillage (50) dont est muni le bras de positionnement (19), verrouille la roue (16) dans sa position de transport (116) dans laquelle la roue (16) est orientée parallèlement à l'axe longitudinal (3A) du corps (3). De plus, l'action du vérin de manoeuvre (8) est annulée de sorte à permettre au corps (3), lorsque le tracteur (2) avance, de pivoter autour de l'axe vertical (7A) du dispositif de liaison (6) pour suivre la trajectoire du tracteur (2).

Le mécanisme de récolte (14), quant à lui, est connu de l'homme de l'art et s'étend sous le châssis (15) dans une direction transversale à la direction d'avance (23A) au travail. Il se compose pour l'essentiel d'une barre de coupe (27) équipée des organes de coupe (24), d'une structure porteuse (28) (figure 2) à laquelle sont accrochés des organes de traitement (29), et d'un carter d'entrée (30). Le carter d'entrée (30) est lié à l'extrémité longitudinale de la structure porteuse (28) dirigée vers la structure d'attelage (4) et est destiné à entraîner les organes de coupe (24) et les organes de traitement (29). Au-dessus des organes de coupe (24) s'étend au moins sensiblement parallèlement à la barre de coupe (27), la structure porteuse (28) supportant les organes de traitement (29). Ceux-ci sont placés derrière les organes de coupe (24) en vue du traitement du produit coupé par ces derniers. Du reste, la structure porteuse (28) comporte des organes de protection (37) (figures 1 et 3) qui s'étendent autour de la barre de coupe (27) et qui sont destinés à protéger l'utilisateur ou des personnes se trouvant dans le voisinage.

L'entraînement du mécanisme de récolte (14) est réalisé à partir de la prise de force (non représentée) du tracteur (2), qui attaque, par l'intermédiaire d'un arbre télescopique à joints universels (38), l'arbre d'entrée (39) (figure 2) d'un dispositif de transmission de mouvement (40). L'arbre de sortie (41) du dispositif de transmission de mouvement (40), qui pivote avec le corps (3) autour de l'axe vertical (7A) de l'articulation (7), est toujours orienté au moins sensiblement parallèlement à l'axe longitudinal (3A) du corps (3) et entraîne, par l'intermédiaire d'un autre arbre télescopique à joints universels (42), l'arbre d'entrée (43) du carter d'entrée (30) du mécanisme de récolte (14). L'arbre d'entrée (43) est également orienté au moins sensiblement parallèlement à l'axe longitudinal (3A) du corps (3).

Un dispositif de suspension (96) comprend un bras de suspension (31) qui suspend le mécanisme de récolte (14) au châssis (15). Dans cette réalisation selon l'invention, le bras de suspension (31) est agencé au-dessus du mécanisme de récolte (14) et s'étend, en vue de dessus, au moins sensiblement parallèlement à la poutre (25) du châssis (15) et dans le voisinage de cette dernière. A l'une de ses extrémités longitudinales, le bras de suspension (31) est lié à la structure porteuse (28) du mécanisme de récolte (14), dans la partie médiane de celle-ci, au moyen d'une première articulation (32) de type pivot. L'axe géométrique (32A) de cette première articulation (32) s'étend au moins sensiblement dans un plan vertical (89) dirigé suivant la direction d'avance (23A) au travail et contenant le centre des masses (14G) du mécanisme de récolte (14). Du reste, ledit axe géométrique (32A) est au moins sensiblement dirigé suivant la direction d'avance (23A) au travail. De plus, la première articulation (32) s'étend au moins sensiblement dans le voisinage d'une droite verticale (91) contenant le centre des masses (14G) du mécanisme de récolte (14). A son autre extrémité longitudinale, le bras de suspension (31) est lié à la poutre (25) du châssis (15) au moyen d'une deuxième articulation (33) agencée près de l'articulation (7) d'axe vertical (7A) liant le châssis (15) à la structure d'attelage (4). Cette deuxième articulation (33) est de type pivot et son axe géométrique (33A) s'étend au moins sensiblement parallèlement à l'axe géométrique (32A) de la première articulation (32). De ce fait, le bras de suspension (31) autorise uniquement un déplacement en hauteur du mécanisme de récolte (14), ainsi qu'un pivotement dudit mécanisme de récolte (14) par rapport au châssis (15) autour d'une direction au moins sensiblement parallèle à la direction d'avance (23A) au travail. Grâce à ce bras de suspension (31), le mécanisme de récolte (14) peut aisément s'adapter aux configurations du terrain et passer par-dessus les obstacles que peut présenter celui-ci.

Tel que visible sur les figures 1 à 3, la faucheuse (1) comporte encore un dispositif de relevage (44) du mécanisme de récolte (14). Ce dispositif de relevage (44) se compose principalement d'un vérin de relevage (45) dont le cylindre (46) est lié au châssis (15) et dont la tige (47) est liée à une chaîne (48). Cette chaîne (48) s'enroule partiellement sur une roue (49) (figure 2), guidée en rotation dans le châssis (15), et est liée à son extrémité éloignée du vérin de relevage (45) au bras de suspension (31). Au travail, lorsque la tige (47) est sortie, la chaîne (48) est détendue et peut se déformer librement, de sorte que le dispositif de relevage (44) ne gêne pas le déplacement en hauteur du mécanisme de récolte (14) par rapport au châssis (15). Lorsque le mécanisme de récolte (14) doit être relevé, il suffira de faire rentrer la tige (47) dans le cylindre (46) du vérin de relevage (45) en injectant de l'huile dans celui-ci. Ce faisant, la tige (47) tire, via la chaîne (48), sur le bras de suspension (31), ce qui a pour effet de pivoter ledit bras (31) par rapport au châssis (15) et de faire monter le mécanisme de récolte (14).

Sur les figures 1 à 4, il apparaît que le bras de suspension (31) est muni d'un dispositif de transmission d'effort (92) qui comporte un galet (34). Le galet (34) est agencé entre la première articulation (32) et la deuxième articulation (33) du bras de suspension (31) et son axe de rotation coupe au moins sensiblement ledit axé géométrique (33A) de la deuxième articulation (33) liant le bras de suspension (31) au châssis (15). Ce galet (34) s'étend entre le bras de suspension (31) et la poutre (25) du châssis (15), de sorte à s'appuyer, par l'intermédiaire d'un support (35) contre ladite poutre (25). Grâce à ce galet (34), l'effort qui s'oppose au glissement du mécanisme de récolte (14) sur le sol est transmis, en partie au moins, par le galet (34) au châssis (15). De ce fait, le bras de suspension (31) peut suivre les déplacements en hauteur du mécanisme de récolte (14), l'articulation (33) étant soulagée dans n'importe quelle position dudit bras (31).

Dans cet exemple de réalisation selon l'invention, le support (35) est agencé entre la partie médiane du bras de suspension (31) et la deuxième articulation (33) dudit bras de suspension (31). Le support (35) comporte par ailleurs quatre parties planes (35A, 35B, 35C, 35D) dont la première (35A) est liée à la face latérale antérieure de la poutre (25) du châssis (15) et contre laquelle vient s'appuyer le galet (34). La deuxième partie (35B) de ce support (35) s'étend approximativement parallèlement sous le bras de suspension (31). La troisième partie (35C), quant à elle, s'étend vers le haut devant le bras de suspension (31) par rapport à la direction d'avance (23A) au travail, de sorte à former un "U" avec les parties précédentes (35A, 35B). La quatrième partie (35D), quant à elle, s'étend horizontalement et est liée à la face supérieure de la poutre (25) du châssis (15). De ce fait, lors des déplacements en hauteur du mécanisme de récolte (14), le bras de suspension (31) se déplace à l'intérieur du support (35), tandis que le galet (34) s'appuie contre la première partie (35A) dudit support (35).

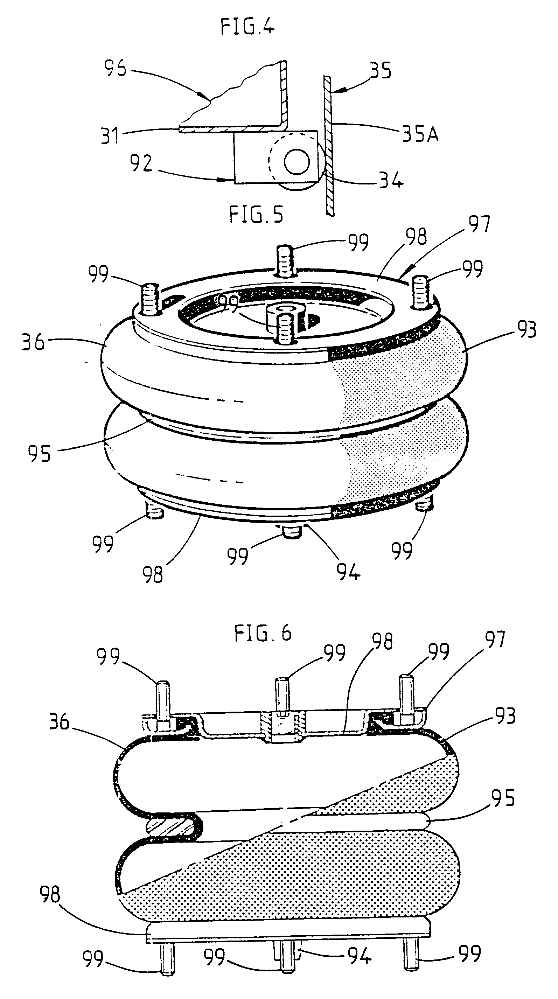

Un dispositif d'allègement (97) dont la structure apparaît sur les figures 1, 2, 3, 5 et 6, comprend un ressort à gaz (36). Ce dernier est agencé entre le bras de suspension (31) et la deuxième partie (35B) du support (35) qui s'étend sous le bras de suspension (31), de sorte à supporter, par l'intermédiaire du bras de suspension (31), une partie du poids du mécanisme de récolte (14). Ce ressort à gaz (36) comporte une enveloppe déformable (93) sous pression et deux flasques (98) (figures 5 et 6). Chaque flasque (98) est lié à une extrémité longitudinale de l'enveloppe déformable (93) et comporte des organes de fixation (99) permettant de lier le ressort à gaz (36) de façon rigide, mais néanmoins démontable, respectivement au bras de suspension (31) et au support (35) du châssis (15).

L'enveloppe déformable, quant à elle, contient un gaz qui peut être amené à la pression désirée au travers d'une valve (94) agencée sur l'un des flasques (98) (figures 5 et 6). En conséquence, il est possible, en gonflant plus ou moins l'enveloppe déformable (93) au travers de la valve (94), d'adapter la rigidité du ressort à gaz (36) aux conditions de travail rencontrées. Avantageusement, le ressort à gaz (36) contient de l'air, ce qui permet à l'utilisateur de gonfler aisément l'enveloppe déformable (93) au moyen d'une simple pompe à air. En outre, pour limiter la déformation latérale de l'enveloppe déformable (93) et la contraindre à une déformation longitudinale plus importante, l'enveloppe déformable (93) est entourée d'un organe de rigidification latérale (95).

Finalement, différentes modifications restent possibles, notamment en ce qui concerne la constitution des divers éléments ou par substitution d'équivalents techniques, sans pour autant sortir du domaine de protection défini dans les revendications. C'est ainsi que le bras de suspension (31) qui, dans l'exemple décrit est constitué par un seul longeron, pourrait très bien comporter plusieurs longerons. Par ailleurs, le domaine de protection s'étend également à des faucheuses différentes de celle décrite dans l'exemple de réalisation, telles que des faucheuses traînées, des faucheuses frontales, etc.

## Revendications

1. Faucheuse (1) comportant :
- un châssis (15) s'appuyant au travail sur le sol au moyen d'au moins une roue (16),
- un moyen de liaison (4) destiné à lier le châssis (15) à un véhicule moteur (2) et lié audit châssis (15) à l'aide d'une articulation (7) d'axe (7A) dirigé vers le haut,
- un mécanisme de récolte (14),
- un dispositif de suspension (96) liant le mécanisme de récolte (14) au châssis (15), de sorte à autoriser un déplacement en hauteur dudit mécanisme de récolte (14) par rapport audit châssis (15),
et
- un dispositif d'allègement (97) du mécanisme de récolte (14) comprenant au moins un organe élastiquement déformable (36),
caractérisée par le fait que le dispositif de suspension (96) comporte un bras de suspension (31) qui s'étend au-dessus du mécanisme de récolte (14) et transversalement à la direction de travail (23A), lequel bras de suspension (31) est lié d'une part au mécanisme de récolte (14) au moyen d'une première articulation (32) d'axe (32A) au moins sensiblement parallèle à la direction de travail (23A) et d'autre part au châssis (15) au moyen d'une deuxième articulation (33) d'axe (33A) au moins sensiblement parallèle à l'axe (32A) de la première articulation (32), ledit axe (32A) de la première articulation (32) s'étendant au moins sensiblement dans le voisinage du plan vertical (89) dirigé suivant la direction de travail (23A) et contenant le centre des masses (14G) dudit mécanisme de récolte (14), et que l'organe élastiquement déformable (36) est agencé entre ledit bras de suspension (31) et ledit châssis (15).

2. Faucheuse selon la revendication 1, caractérisée par le fait que l'organe élastiquement déformable (36) comporte une enveloppe déformable (93) sous pression.

3. Faucheuse selon la revendication 2, caractérisée par le fait que l'enveloppe déformable (93) contient un gaz.

4. Faucheuse selon la revendication 3, caractérisée par le fait que l'enveloppe déformable (93) contient de l'air.

5. Faucheuse selon la revendication 3 ou 4, caractérisée par le fait que l'enveloppe déformable est gonflable à partir d'une valve (94) au travers de laquelle le gaz peut être amené à la pression désirée.

6. Faucheuse selon la revendication 5, caractérisée par le fait que l'enveloppe déformable (93) est munie à chacune de ses extrémités longitudinales d'un flasque correspondant (98), lesdits flasques (98) servant à lier l'organe élastiquement déformable (36) respectivement au châssis (15) et au bras de suspension (31), et que l'un au moins des flasques (98) est destiné à être muni de la valve (94).

7. Faucheuse selon l'une au moins des revendications 2 à 6, caractérisée par le fait que l'enveloppe déformable (93) est entourée d'un organe de rigidification latérale (95).

8. Faucheuse selon l'une au moins des revendications 1 à 7, caractérisée par le fait que la première articulation (32) se trouve au moins sensiblement dans le voisinage d'une droite verticale (91) contenant le centre des masses (14G) du mécanisme de récolte (14).

9. Faucheuse selon l'une au moins des revendications 1 à 8, caractérisée par le fait que l'axe (33A) de la deuxième articulation (33) s'étend au moins sensiblement dans le voisinage de l'articulation (7) liant le châssis (15) au moyen de liaison (4).

10. Faucheuse selon l'une au moins des revendications 1 à 9, caractérisée par le fait que le bras de suspension (31) est muni d'un dispositif de transmission d'effort (92) qui transmet au châssis (15) une partie au moins de l'effort engendré par le glissement du mécanisme de récolte (14) sur le sol.

11. Faucheuse selon la revendication 10, caractérisée par le fait que le dispositif de transmission d'effort (92) se trouve entre la première articulation (32) et la deuxième articulation (33) du bras de suspension (31).

12. Faucheuse selon la revendication 10 ou 11, caractérisée par le fait que le dispositif de transmission d'effort (92) comporte un galet (34).

13. Faucheuse selon la revendication 12, caractérisée par le fait que le galet (34) est lié au bras de suspension (31) et s'appuie contre le châssis (15).

14. Faucheuse selon l'une au moins des revendications 1 à 13, caractérisée par le fait que l'organe élastiquement déformable (36) est agencé entre la partie médiane du bras de suspension (31) et l'axe (33A) de la deuxième articulation (33) dudit bras de suspension (31).

15. Faucheuse selon la revendication 14, caractérisée par le fait que l'organe élastiquement déformable (36) est agencé sous le bras de suspension (31).

16. Faucheuse selon la revendication 15, caractérisée par le fait que le châssis (15) est muni d'un support (35) qui s'étend vers le bas et sous le bras de suspension (31), l'organe élastiquement déformable (36) étant agencé entre ledit support (35) et ledit bras de suspension (31).

17. Faucheuse selon l'une au moins des revendications 1 à 16, caractérisée par le fait qu'un dispositif de relevage (44) s'étend entre le châssis (15) et le bras de suspension (31).

18. Faucheuse selon la revendication 17, caractérisée par le fait que le dispositif de relevage (44) comporte un vérin de relevage (45) lié d'une part au châssis (15) et d'autre part à une chaîne (48) qui s'enroule partiellement sur une roue (49) guidée en rotation dans le châssis (15) et qui est liée directement ou indirectement à son extrémité éloignée du vérin de relevage (45) au bras de suspension (31).

19. Faucheuse selon l'une au moins des revendications 1 à 18, caractérisée par le fait que le châssis (15) comporte une poutre (25) s'étendant, en vue de dessus, au moins sensiblement parallèlement au bras de suspension (31) et dans le voisinage de ce dernier.

20. Faucheuse selon la revendication 19, caractérisée par le fait qu'à l'une de ses extrémités longitudinales, la poutre (25) du châssis (15) est liée, par l'intermédiaire d'une articulation supplémentaire (26) d'axe (26A) au moins sensiblement horizontal et dirigé au moins sensiblement suivant la direction de travail (23A), à l'articulation (7) liant le moyen de liaison (4) au châssis (15), et qu'à son autre extrémité longitudinale, la poutre (25) est munie d'au moins une roue (16).

21. Faucheuse selon la revendication 19 ou 20, caractérisée par le fait qu'au moins une roue (16) s'étend, compte tenu de la direction d'avance au travail (23A), derrière l'extrémité du mécanisme de récolte (14) éloignée du moyen de liaison (4).

## Patentansprüche

1. Mähmaschine (1) umfassend:
- einen Rahmen (15), der sich während der Arbeit auf dem Boden mittels mindestens eines Rades (16) abstützt,
- ein Verbindungsmittel (4) zur Verbindung des Rahmens (15) mit einem Motorfahrzeug (2) und welches mit dem Rahmen (15) mittels eines Gelenkes (7) mit einer nach oben gerichteten Achse (7A) verbunden ist,
- einen Erntemechanismus (14),
- eine Aufhängevorrichtung (96), die den Erntemechanismus (14) mit dem Rahmen (15) derart verbindet, daß eine Höhenversetzung des Erntemechanismus (14) im Verhältnis zum Rahmen (15) möglich ist,
und
- eine Entlastungseinrichtung (97) für den Erntemechanismus (14), die mindestens ein elastisch deformierbares Organ (36) umfaßt,
dadurch gekennzeichnet, daß die Aufhängevorrichtung (96) einen Aufhängungsarm (31) aufweist, der sich oberhalb des Erntemechanismus (14) und quer zur Arbeitsrichtung (23A) erstreckt, welcher Aufhängungsarm (31) einerseits mit dem Erntemechanismus (14) mittels eines ersten Gelenkes (32) mit einer zumindest im wesentlichen zur Arbeitsrichtung (23A) parallelen Achse (32A) und anderseits mit dem Rahmen (15) mittels eines zweiten Gelenkes (33) mit einer zumindest im wesentlichen zur Achse (32A) des ersten Gelenkes (32) parallelen Achse (33A) verbunden ist, wobei sich die Achse (32A) des ersten Gelenkes (32) zumindest im wesentlichen in der Nähe der Vertikalebene (89) erstreckt, die in Arbeitsrichtung (23A) ausgerichtet ist und den Schwerpunkt (14G) des Erntemechanismus (14) enthält, und daß das elastisch deformierbare Organ (36) zwischen dem Aufhängungsarm (31) und dem Rahmen (15) angeordnet ist.

2. Mähmaschine nach Anspruch 1, dadurch gekennzeichnet, daß das elastisch deformierbare Organ (36) eine unter Druck stehende deformierbare Hülle (93) aufweist.

3. Mähmaschine nach Anspruch 2, dadurch gekennzeichnet, daß die deformierbare Hülle (93) ein Gas enthält.

4. Mähmaschine nach Anspruch 3, dadurch gekennzeichnet, daß die deformierbare Hülle (93) Luft enthält.

5. Mähmaschine nach Anspruch 3 oder 4, dadurch gekennzeichnet, daß die deformierbare Hülle durch ein Ventil (94) aufblasbar ist, durch welches das Gas auf den gewünschten Druck eingeführt werden kann.

6. Mähmaschine nach Anspruch 5, dadurch gekennzeichnet, daß die deformierbare Hülle (93) an jedem ihrer Längsenden einen entsprechenden Flansch (98) aufweist, welche Flansche (98) zur Verbindung des elastisch deformierbaren Organs (36) mit dem Rahmen (15) bzw. dem Aufhängungsarm (31) dient, und daß zumindest einer der Flansche (98) das Ventil (94) aufweisen kann.

7. Mähmaschine nach mindestens einem der Ansprüche 2 bis 6, dadurch gekennzeichnet, daß die deformierbare Hülle (93) von einem Organ (95) zur seitlichen Versteifung umgeben ist.

8. Mähmaschine nach mindestens einem der Ansprüche 1 bis 7, dadurch gekennzeichnet, daß das erste Gelenk (32) sich zumindest im wesentlichen in der Nähe einer vertikalen Geraden (91) befindet, die den Schwerpunkt (14G) des Erntemechanismus (14) enthält.

9. Mähmaschine nach mindestens einem der Ansprüche 1 bis 8, dadurch gekennzeichnet, daß sich die Achse (33A) des zweiten Gelenkes (33) zumindest im wesentlichen in der Nähe des Gelenkes (7) erstreckt, das den Rahmen (15) mit dem Verbindungsmittel (4) verbindet.

10. Mähmaschine nach mindestens einem der Ansprüche 1 bis 9, dadurch gekennzeichnet, daß der Aufhängungsarm (31) mit einer Einrichtung zur Übertragung von Belastungen (92) versehen ist, die zumindest einen Teil der durch das Gleiten des Erntemechanismus (14) auf dem Boden hervorgerufenen Belastungen auf den Rahmen (15) überträgt.

11. Mähmaschine nach Anspruch 10, dadurch gekennzeichnet, daß die Einrichtung zur Übertragung von Belastungen (92) sich zwischen dem ersten Gelenk (32) und dem zweiten Gelenk (33) des Aufhängungsarmes (31) befindet.

12. Mähmaschine nach Anspruch 10 oder 11, dadurch gekennzeichnet, daß die Einrichtung zur Übertragung von Belastungen (92) eine Rolle (34) umfaßt.

13. Mähmaschine nach Anspruch 12, dadurch gekennzeichnet, daß die Rolle (34) mit dem Aufhängungsarm (31) verbunden ist und sich gegen den Rahmen (15) abstützt.

14. Mähmaschine nach mindestens einem der Ansprüche 1 bis 13, dadurch gekennzeichnet, daß das elastisch deformierbare Organ (36) zwischen dem Mittelteil des Aufhängungsarmes (31) und der Achse (33A) des zweiten Gelenkes (33) des Aufhängungsarmes (31) angeordnet ist.

15. Mähmaschine nach Anspruch 14, dadurch gekennzeichnet, daß das elastisch deformierbare Organ (36) unterhalb des Aufhängungsarmes (31) angeordnet ist.

16. Mähmaschine nach Anspruch 15, dadurch gekennzeichnet, daß der Rahmen (15) eine Stütze (35) aufweist, die sich nach unten und unterhalb des Aufhängungsarmes (31) ertsreckt, wobei das elastisch deformierbare Organ (36) zwischen der Stütze (35) und dem Aufhängungsarm (31) angeordnet ist.

17. Mähmaschine nach mindestens einem der Ansprüche 1 bis 16, dadurch gekennzeichnet, daß eine Hebevorrichtung (44) sich zwischen dem Rahmen (15) und dem Aufhängungsarm (31) erstreckt.

18. Mähmaschine nach Anspruch 17, dadurch gekennzeichnet, daß die Hebevorrichtung (44) einen Hubzylinder (45) umfaßt, die einerseits mit dem Rahmen (15) und anderseits mit einer Kette (48) verbunden ist, die teilweise um ein Rad (49) läuft, das drehbar im Rahmen (15) geführt ist und die direkt oder indirekt mit ihrem von dem Hubzylinder (45) entfernten Ende mit dem Aufhängungsarm (31) verbunden ist.

19. Mähmaschine nach mindestens einem der Ansprüche 1 bis 18, dadurch gekennzeichnet, daß der Rahmen (15) einen Balken (25) umfaßt, der sich, von oben gesehen, zumindest im wesentlichen parallel zum Aufhängungsarm (31) und in der Nähe desselben erstreckt.

20. Mähmaschine nach Anspruch 19, dadurch gekennzeichnet, daß, an einem seiner Längsenden, der Balken (25) des Rahmens (15) mittels eines zusätzlichen Gelenkes (26) mit einer zumindest im wesentlichen horizontalen und zumindest im wesentlichen in Arbeitsrichtung (23A) weisenden Achse (26A) mit dem Gelenk (7) verbunden ist, welcher das Verbindungsmittel (4) mit dem Rahmen (15) verbindet, und daß der Balken (25) an seinem anderen Längsende mit mindestens einem Rad (16) versehen ist.

21. Mähmaschine nach Anspruch 19 oder 20, dadurch gekennzeichnet, daß sich zumindest ein Rad (16), bezogen auf die Arbeitsvorschubrichtung (23A), hinter dem vom Verbindungsmittel (4) entfernten Ende des Erntemechanismus (14) befindet.

## Claims

1. A mower (1) comprising:
- a frame (15) resting on the ground during work by means of at least one wheel (16),
- hitching means (4) intended to connect the frame (15) to a motor vehicle (2) and connected to the said frame (15) with the help of a joint (7) whose axis (7A) is directed upwards,
- a harvesting mechanism (14),
- a suspension device (96) connecting the harvesting mechanism (14) to the frame (15) in such a way that it permits an upwardly displacement of the harvesting mechanism (14) relative to the said frame (15), and
- a lightening device (97) for the harvesting mechanism (14) comprising at least one elastically deformable member (36),
characterised in that the suspension device (96) comprises a suspension arm (31) which extends above the harvesting mechanism (14) and transversely to the direction of work (23A), which suspension arm (31) is connected on the one hand to the harvesting mechanism (14) by means of a first joint (32) whose axis (32A) is at least approximately parallel to the direction of work (23A) and on the other hand to the frame (15) by means of a second joint (33) whose axis (33A) is at least approximately parallel to the axis (32A) of the first joint (32), the said axis (32A) of the first joint (32) extending at least approximately in the vicinity of the vertical plane (89) directed in the direction of work (23A) and containing the centre of mass (14G) of the said harvesting mechanism (14), and that the elastically deformable member (36) acts between the said suspension arm (31) and the said frame (15).

2. A mower in accordance with claim 1, characterised in that the elastically deformable member (36) includes a deformable envelope (93) which is under pressure.

3. A mower in accordance with claim 2, characterised in that the deformable envelope (93) contains a gas.

4. A mower in accordance with claim 3, characterised in that the deformable envelope (93) contains air.

5. A mower in accordance with claim 3 or 4, characterised in that the deformable envelope is inflatable from a valve (94) through which the gas may be supplied at the desired pressure.

6. A mower in accordance with claim 5, characterised in that the deformable envelope (93) is equipped at each of its longitudinal ends with a corresponding plate, the said plates (98) serving to connect the elastically deformable member (36) respectively to the frame (15) and to the suspension arm (31), and in that at least one of the plates (98) is intended to be equipped with the valve (94).

7. A mower in accordance with one at least of claims 2 to 6, characterised in that the deformable envelope (93) is surrounded by a lateral strengthening element (95).

8. A mower in accordance with one at least of claims 1 to 7, characterised in that the first joint (32) is located at least approximately in the vicinity of a vertical straight line (91) containing the centre of mass (14G) of the harvesting mechanism (14).

9. A mower in accordance with one at least of claims 1 to 8, characterised in that the axis (33A) of the second joint (33) extends at least approximately in the vicinity of the joint (7) connecting the frame (15) to the hitching means (4).

10. A mower in accordance with one at least of claims 1 to 9, characterised in that the suspension arm (31) is equipped with a force transmission device (92) which transmits to the frame (15) one part at least of the force generated by the sliding of the harvesting mechanism (14) on the ground.

11. A mower in accordance with claim 10, characterised in that the force transmission device (92) is located between the first joint (32) and the second joint (33) of the suspension arm (31).

12. A mower in accordance with claim 10 or 11, characterised in that the force transmission device (92) comprises a roller (34).

13. A mower in accordance with claim 12, characterised in that the roller (34) is connected to the suspension arm (31) and rests against the frame (15).

14. A mower in accordance with one at least of claims 1 to 13, characterised in that the elastically deformable member (36) is arranged between the middle part of the suspension arm (31) and the axis (33A) of the second joint (33) of the said suspension arm (31).

15. A mower in accordance with claim 14, characterised in that the elastically deformable member (36) is arranged under the suspension arm (31).

16. A mower in accordance with claim 15, characterised in that the frame (15) is equipped with a support (35) which extends downwards and under the suspension arm (31), the elastically deformable member (36) being arranged between the said support (35) and the said suspension arm (31).

17. A mower in accordance with one at least of claims 1 to 16, characterised in that a lifting device (44) extends between the frame (15) and the suspension arm (31).

18. A mower in accordance with claim 17, characterised in that the lifting device (44) comprises a lifting jack (45) connected on the one hand to the frame (15) and on the other hand to a chain (48) which is wrapped partially around a wheel (49) guided in rotation in the frame (15) and which is connected directely or indirectly, at its end furthest from the lifting jack (45), to the suspension arm (31).

19. A mower in accordance with one at least of claims 1 to 18, characterised in that the frame (15) comprises a beam (25) extending, when seen from above, at least approximately parallel to the suspension arm (31) and in the vicinity thereof.

20. A mower in accordance with claim 19, characterised in that at one of its longitudinal ends, the beam (25) of the frame (15) is connected, by means of an additional joint (26) whose axis (26A) is at least approximately horizontal and directed at least approximately along the direction of work (23A), to the joint (7) connecting the hitching means (4) to the frame (15), and in that at its other longitudinal end, the beam (25) is equipped with at least one wheel (16).

21. A mower in accordance with claim 19 or 20, characterised in that at least one wheel (16) extends, taking account of the direction of advance during work (23A), behind the end of the harvesting mechanism (14) furthest from the hitching means (4).
